# EUROPEAN PATENT APPLICATION

(11) **EP 1 920 830 A1**
(43) Date of publication of application: **14.05.2008**
(21) Application number: 06301134.0
(22) Date of filing: 08.11.2006
(51) Int. Cl.: B01J 23/10, B01J 21/06, B01J 21/10, B01J 23/40, C01B 3/00, C01B 3/32, C01B 3/34, C01B 3/36, C01B 3/38, C01B 3/40, C01B 31/18, C01B 31/20

(54) **Group VIII and ceria/zirconia containing catalysts for catalytic hydrocarbon reforming or oxidation**

(71) Applicant: L'AIR LIQUIDE, Société Anonyme pour l'Etude et l'Exploitation des Procédés Georges Claude, 75007 Paris (FR)
(72) Inventor: Del Gallo, Pascal, 91410 Dourdan (FR); Richet, Nicolas, 78330 Fontenay-Le-Fleury (FR); Gary, Daniel, 78180 Montigny-Le-Bretonneux (FR); Chartier, Thierry, 87220 Feytiat (FR); Delbos, Cedric, 91830 Le Coudray Montceaux (FR); Rossignol, Fabrice, c/o Université de Limoges, 47-73 avenue Albert Thomas, 87065 Limoges (FR)
(74) Representative: Conan, Philippe Claude

(57) **Abstract**

A catalytic composition comprising a catalytically active metal and a solid support, characterized in that said catalytically active metal is included into the core structure of said solid support, and said solid support is a refractory and ionic conductive oxide, process for their preparation and its use as a catalyst in synthesis gas production.

## Description

The invention relates to a new type of catalysts comprising refractory and ionic conductive oxide supporting noble metal(s)

A large number of companies are currently working on the production of synthesis gas (mixture of H₂ and CO) starting from methane. Two main technologies have been deeply studied: Steam methane reforming (SMR) and catalytic partial oxidation of methane (CPO).

In the SMR technology, methane reacts with steam to produce a rich mixture of hydrogen and carbon monoxide. Two main reactions are involved:
(1) CH₄ + H₂O ⇔ CO + 3 H₂ (ΔH = 205.8 kJ/mol)
(2) CO + H₂O ⇔ CO₂ + H₂ (ΔH = -41.6 kJ/mol)

This industrial process is thus based on the methane oxidation by water, and can lead to the production of H₂ tonnage.

The reaction (1) is highly endothermic, and is promoted at high temperature, low pressure, high steam/carbon ratio (hereafter named: S/C ratio) (2 up to 4 times the stoechiometric composition) and low hourly volumetric flow rate (hereafter named: VVH) (1600 - 3000/h). The industrial reactors are working in a temperature range from 650°C to 950°C, and under high pressure from 1.5 10⁶ Pa to 4 10⁶ (15 bars to 40 bars). Temperatures equal or greater than 850°C are nevertheless required to achieve a significant conversion into CO and H₂ (e.g., H₂ yield around 70%). The reaction kinetics is improved by the use of catalysts.

Commercial catalysts are typically based on metals or metals doped with an alkali element (K), which are deposited on Magnesium or Calcium Aluminate supports, such as Ni/MgAl₂O₄ or Ni/CaAl₄O₇. Companies, such as Haldhor Topse A.S, Süd Chemie or Johnson Matthey, commercialize them.

European patent application publication EP 1 013 603 A1, discloses new catalysts which comprise from 0.01 wt.% to 10 wt.% stabilizing elements as for example Zirconium (Zr), Yttrium (Y), Tungsten (W), Lanthanum (La) or Cerium (Ce).

International publication WO 03/106332 discloses catalysts wherein the previously mentioned supports are considered as "inorganic oxide supports". It is referred to materials composed of Alumina (Al₂O₃), Zirconia (ZrO₂), Titania (TiO₂), rare earth metal oxides, or materials, which are formed from mixtures of these compounds such as Zirconia-Cerium oxide.

The active metal is deposited using incipient wetness impregnation, which means that the impregnation of the catalyst support is carried out with a volume of metal salt solution roughly equal to the pore volume of the support material.

New catalysts have been proposed since the beginning of year 2000. They are based on a noble metal or a mixture of noble metals deposited on an inorganic oxide support, but these catalytic materials are still obtained by the impregnation method:
- International publication WO/20005/056179 A1 discloses a catalyst with a noble metal (Rh; Rh + Au) which is supported on MgAl₂O₄ + CeO₂ (+ Fe₂O₃ Cr₂O₃) doped by Li. Examples of such catalyst includes the catalyst with the following composition: 2wt.% Rh / 30wt.% Ce_{0.75} Zr_{0.25} O₂ / Cordierite.
- US patent 6,884,340 B1 discloses a catalyst consisting of a noble metal (Pt) and lanthanide (Ce, Nd), which are supported on Alumina (Al₂O₃).
- US patent 6,872,300 B1 discloses catalysts consisting of a noble metal (Pt) and promoter metal (Re), which are supported on Al₂O₃-TiO₂.

A preparation of such catalysts includes first, the impregnation of the classical support (γ - Alumina or α- Alumina) by a salt (generally a nitrate precursor) containing Mg, Ce, La, ... or a mixture of them. After drying and calcination, some stabilized compounds are formed, like La₂O₃ - Al₂O₃, CeO₂ - Al₂O₃, MgO - Al₂O₃, ... These compounds can completely cover the initial support or can be present as clusters on the alumina surface. The next step then consists in the impregnation of the stabilized support by the active phase (noble metal(s) or nickel; generally as a nitrate precursors).

In the methane CPO technology, three main reactions are involved:

(3) CH₄ + 1.5 O₂ ⇔ CO + 2 H₂O (ΔH = -44 kJ/mol)

(2) CO + H₂O ⇔ CO₂ + H₂ (ΔH = -41,6kJ/mol)

(4) CH₄ ⇔ C + 2 H₂ (ΔH = 74.5kJ/mol)

This process is highly exothermic; temperature reaches above 900°C. The H₂ /CO molar ratio, which is reached is close to 1.5 up to 2, depending on the operating conditions. A lot of bibliographic references relate to this technology:
- International publication WO/99/15483 discloses a noble metal or a mixture of noble metals (Rh, Pt, Ir, Os), which is deposited on highly refractory inorganic materials selected among compounds of elements of Groups IIa, IIIa, IVa, IIIb, and IVb as well as from the Lanthanide group of the periodic table. Typical compounds are oxides, carbides, and nitrides of Zirconium, Aluminum, Lanthanum and their combinations. A Zirconia - based structure is preferred.

US patent 5,720,901 discloses a CPO process of hydrocarbons using noble metal catalysts (Rh, Ru or Ir).

J.K. Hockmuth [CPO of methane...Applied Catalysis B, Environmental, 1 (1992), 89-100] reports the use of a combination of Pt & Pd supported on cordierite for methane CPO.

European patent application publication EP 1 570 904 A1, discloses a catalyst with a noble metal (Rh) supported on a Zirconia - Ceria material. The advantage of the use of Rh noble metal as the active phase for the synthesis gas production processes, is the increase of the methane conversion, a better H₂ selectivity, a better Carbon gasification rate, while allowing to process at a lower S / C molar ratio in (SMR), a lower O / C ratio in (CPO) or a lower ratio CO₂ / C in dry reforming and a higher VVH, because of the higher reactivity.

One of the main advantages in using noble metal catalysts in SMR process is related to soot formation, because Ni, which is a common metal catalyst, is considered as being responsible of the formation of Carbon. As an example, G.Q. Lu et al. (G.Q.Lu - Shaobin Wang - University of Queensland (Australia) - Chemtech (1999) - 37-43) noted that Ni/Al₂O₃ and Ni/CaO-Al₂O₃ were not suitable for CO₂ reforming of methane because they lead to the formation of Carbon and that the addition of a promoter like CeO₂ to the catalyst (5 wt.% of CeO₂ in Al₂O₃) avoids this phenomenon, thanks to its redox properties, which promote the oxidation of the carbon species that are generated at the surface of the catalyst.

The Carbon formation depends on the operating conditions, such as the choice of oxidizing agent, the methane ratio, the pressure or the temperature and of the type of catalyst namely the nature and the size of the metallic particles, the nature of the support (acidity), the morphology of the support, and the chemical interactions which are developed between the support and the active phase.

Using a noble metal, the rate of elimination of carbon along the reaction is greater than the rate of formation. But the use of noble(s) metal(s) only, deposited on classical inorganic supports is not the best solution because these active elements (Rh, Pt, Pd or a mixture of them), must be attached together with inorganic supports, which are acceptable in terms of (i) stability under hydrothermal conditions, (ii) ionic conductivity to suppress the carbon formation like Ceria and/or Zirconia and which are able to oxidize the deposited carbon species. Ceria-containing supports have been recently studied ("On the catalytic aspects of steam-methane reforming", a literature survey, P. van Beurden, 12.2004). Among them, CeO₂ - Al₂O₃, CeZrO₂ and CeZrOₓ-Al₂O₃ supports were more specifically investigated.

It was found that in the catalytic system: Ni/Ce_{0.15}Zr_{0.85} O₂, two kinds of active sites exist, one for the methane activation (on Ni) and one for steam and/or oxygen activation (on CeZrO₂ support) (Dong et al., "Methane reforming over Ni-Ce-ZrO2 catalysts: effects of nickel content", Appl. Cata. A 226, 63-72). Because of the addition of Ceria, the ability to store, release and transfer oxygen species (O, O²⁻, OH ...) is acquired, and results in an enhanced ability to prevent from forming Carbon, which would normally appear on the metal or on the metal-support interface. Strong interactions between NiO and the CeZrO₂ matrix were also observed.

The crystallographic structure seems to play an important role in the reactivity of the support and of the active phase. Other authors also confirm this approach (Roh et al., "carbon dioxide reforming of methane over Ni incorporated into Ce-ZrO2 catalysts, 2004, Appl. Cata. A 276, 231-239).

Other authors pointed out the interest to use ionic conductors like refractory ceramics as support. Specific effects of the addition of Ceria (CeO₂) to Zirconia (ZrO₂) were thus demonstrated in terms of stability and resistance to coke formation. The highest stability of Pt / Ce_{0.2}Zr_{0.8} O₂, compared with the activity of Pt/ZrO₂ in methane reforming is due to the higher density of the oxygen vacancies of the support, which favors the "carbon cleaning mechanism" of the metallic particles (Noronha et al., 2003, "catalytic performances of Pt/ZrO2 and Pt/Ce-ZrO2 catalysts on CO2 reforming of CH4 coupled with steam reforming or under high pressure; Cata. Letters 90, 13-21).

As described above, the resistance of a catalyst to coke formation is due (i) to the choice of metal active phase and support, (ii) to the properties of the support (ionic conductivities, ...) but also (iii) to the size and dispersion of the metallic nanoparticles. This last point is a direct consequence of above items (i) and (ii) and of the elaboration process (from precursors to the final object).

The inventors thus developed a new type of catalysts, which improve the yield of the synthesis gas production by methane reforming, without damaging their stability and having a beneficial effect on the resistance to Carbon formation.

The subject mater of the present application relates to a new type of catalytic materials which are based on noble metal(s) mixed with refractory and ionic conductive oxides like Ceria (CeO₂), Zirconia (ZrO₂) or mixed (CeₓZr_{y}O_{2-δ}) or CeₓZr_{y}N_{z}O_{2-δ} wherein N is a doping element like Yttrium (Y), Erbium (Er), Magnesium (Mg), Lanthanum (La), Praseodium (Pr), and which are usable in steam methane reforming (SMR) processes, Catalytic partial oxidation (CPO) of methane processes, Ethanol steam reforming (ESR) processes, as well as in synthesis gas production processes involving the working of a ceramic membrane reactor (CMR)

That is why, according to a first embodiment, the present invention relates to a catalytic composition comprising a catalytically active metal and a solid support, characterized in that said catalytically active metal is included into the core structure of said solid support, and said solid support is a refractory and ionic conductive oxide.

In the new catalytic material as described above, the catalytically active metal is included inside the structure of the support below its surface; the maximum quantity of said included catalytically active metal mainly depends on the crystallographic structure of the support, of the metal atom size and of the electronic interactions.

As an example of inclusion of metal in a support, reference can be made to the "solid solutions" or to other forms of intimate mixtures. For a solid solution, the maximum quantity of catalytically active metal is the solubility limit of the metal in the solid, which is generally between 5% molar to 10% molar; it means for example, that a solid solution of 1 % molar Rhodium in Ceria contains 1 Rh atom per 100 CeO₂ moles. In such intimate mixtures, the included catalytically active metal cannot be considered as being separated from the support, since both materials are intimately mixed before the use in operating conditions. As other intimate mixtures, which are not a solid solution, are the new crystalline structures incorporating both the metal atoms and the atoms constituting the oxide. According to the first embodiment of the invention, the catalytically active phase of the catalytic composition consists in the intimate mixtures of the catalytically active metal with the support.

According to a particular embodiment of the invention, the catalytic composition as defined above, is a saturated solid solution, or other forms of intimate mixtures, of said catalytically active metal in said solid support.

By nanoparticles, it is understood that the average size of the particle is less or equal to 10⁻⁷ m.

According to another particular embodiment of the invention, in the catalytic composition as defined above, the catalytically active metal is selected from Ruthenium (Ru), Rhodium (Rh), Palladium (Pd), Rhenium (Re), Osmium (Os), Iridium (Ir) Platinum (Pt) or combinations thereof.

According to another particular embodiment of the invention, in the catalytic composition as defined above, the catalytically active metal is Rhodium or a combination of Rhodium with Platinum.

According to another particular embodiment of the invention, in the catalytic composition as defined above, the refractory and ionic conductive oxide is selected from Ceria (CeO₂), Zirconia (ZrO₂), mixed oxides of the formula (I):

Ce₍₁₋ₓ₎ZrₓO_{(2-δ)} (I),

wherein 0 < x < 1 and δ ensures the electrical neutrality of the oxide, or doped mixed oxides of the formula (II):

Ce_{(1-x-y)}ZrₓD_{y}O_{2-δ} (II),

wherein D is selected from Magnesium (Mg), Yttrium (Y), Strontium (Sr), Lanthanum (La), Praseodium (Pr), Samarium (Sm), Gadolinium (Gd), Erbium (Er) or Ytterbium (Yb); wherein 0 < x < 1, 0< y <0.5 and δ ensures the electrical neutrality of the oxide.

As a more specific embodiment, which must not be regarded as a limitation of the present invention, in the catalytic composition as defined above, the catalytically active metal is Rhodium (Rh), and the refractory and ionic conductive oxide is selected from Ceria (CeO₂) or from the mixed oxide of the formula (I'):

Ce_{(1-x')}Zr_{x'}O_{(2-δ)} (I'),

wherein 0 < x' ≤ 0.5 and δ ensures the electrical neutrality of the oxide.

As another more specific embodiment, the catalytic composition as defined above, contains from 0.1 to 5.0 wt % of catalytically active metal per 100 wt % of refractory and ionic conductive oxide.

Another embodiment of the present invention is a process for the preparation of a catalytic composition as defined above, comprising the following successive steps:
Step 1: Mixing of a precursor of the catalytically active metal with a powder of the refractory and ionic conductive oxide in a proportion to reach a final amount of said catalytically active metal less or equal to its dissolving maximum amount in said refractory and ionic conductive oxide, in a solvent containing a dispersing agent, to form a suspension;
Step 2: Drying the suspension obtained at Step 1 to form a powdered mixture;
Step 3: Heating of the powdered mixture obtained at Step 2 to decompose the precursor of the catalytically active metal and to obtain the catalytic composition.

A particular embodiment of the above process also comprises a subsequent Step 4 of ageing the catalytic composition obtained at Step 3.

Another particular embodiment of the above process also comprises the preparation of the powder of the refractory and ionic conductive oxide, which is used at Step 1, said preparation comprising the subsequent following steps:
Step P₁: Preparation of an aqueous solution of salt(s) precursor(s) of said refractory and ionic conductive oxide;
Step P₂: Partial evaporation by heating and agitation of the water of the solution obtained at step P₁, to form a gel of the metal salt(s) precursor(s) of the refractory and ionic conductive oxide;
Step P₃: Heat drying of the gel obtained at Step P₂,
Step P₄: Grinding of the dry gel obtained at Step P₃, to form a powder of the gel of the metal salt(s) precursor(s) of the refractory and ionic conductive oxide.

Step P₅: Heating of the powder obtained at Step P₄ to decompose the precursors and to obtain the powder of the refractory and ionic conductive oxide.

Another embodiment of the present invention is a process for the preparation of a catalytic composition as defined above, comprising the following successive steps:
Step 1': Preparation of a mixture of salt(s) precursor(s) of said refractory and ionic conductive oxide and of precursor(s) of the catalytically active metal, comprising the formation of a dispersion of said precursors, wherein the proportion of metal salt precursor to reach a final amount of said catalytically active metal is less or equal to its dissolving maximum amount in said refractory and ionic conductive oxide, in a liquid medium followed by the solvent removal;
Step 2': Calcination of the mixture formed at Step 1' under air or under oxygen, to decompose said precursors and to obtain a mixture of said refractory and ionic conductive oxide and of the catalytically active metal;
Step 3': Attrition milling of the mixture obtained at Step 2', to obtain the catalytic composition.

According to another particular embodiment of the above process, namely the Step 2'-Step 3' sequence, is repeated twice.

In the above defined processes and their particular embodiments, the elemental operations such as powders mixing, suspension making, suspension heat drying, powder grinding, powder heating, calcination, attrition milling, are implemented in an usual way for the man skill in the art of ceramic manufacturing.

Another embodiment of the present invention is the use of a catalytic composition as defined above, as a catalyst in hydrocarbons Steam Reforming, hydrocarbons catalytic partial oxidation or hydrocarbons dry reforming and more particularly, the use of a catalytic composition as defined above, wherein hydrocarbons is Natural gas, methane, ethane, propane, butane or mixtures thereof.

A last embodiment of the present invention concerns synthesis gas production either by steam reforming, by catalytic partial oxidation or by dry reforming of natural gas, methane, ethane, propane, butane or mixtures thereof, involving as a reaction catalyst, the catalytic composition as defined above.

The following considerations tend to propose some mechanisms of action of the catalytic composition, however they must not be regarded as limiting the scope of the invention.

- During the reaction under reducing atmosphere in operating conditions (SMR, CPO...), an *"ex-situ"* growth of the metal from the inner part of the support toward its-surface can occur leading to the appearing of isolated metallic clusters (typically below 1 to 100 nanometers in size, preferably between 1 to 50 nm). The presence of these clusters is demonstrated by Field emission scanning electron microscopy (hereafter named: FESEM), by Transmission Electron Microscopy (hereafter named: TEM) and by chemisorption analyses. The appearing of the clusters, as well as their number and size, depend on the operating conditions (temperature, pressure, atmosphere...), as well as on the quantity of metal initially present in the solid solution or other forms of intimate mixtures. The size of these clusters directly depends on the followings factors:
(i) The noble metal(s) wt.% used (it can go up to a complete covering of the nanoparticles support),
(ii) The solubility (solid solution or other forms) between the metallic phase and the support (refractory + ionic conductor),
(iii) The use of a specific elaboration process (from the precursors to the final product), and
(iv) The formation of the active phase under operating conditions.

In summary, the claimed catalytic composition may be regarded as a combination of nanosized noble metal clusters extracted out of a solid solution or other forms of intimate mixtures with the support. The extracted noble metal clusters (Rh, Pt, ...) act as active sites, which accelerate the establishment of a chemical equilibrium without themselves being consumed, whereas the support acts as an anchor for these clusters, thus preventing from coalescence effects in operating conditions. This support may itself be a nanosized powder with a high specific surface area to improve the effectiveness of the catalytic material, which is partly linked to the noble metal surface area (*i.e.* the number of active sites). The higher the active surface area of the catalyst is, the greater the number of molecules produced per time unit is. The reactions occurring in an heterogeneous phase, the nature of the noble metal (Pt, Rh, ...), the initial size, the spatial distribution and the presence of preferential crystalline planes are key parameters that mainly depend on the elaboration process. The catalyst stability results of the physico-chemical properties of the metals used (chemical reactivity, melting point ...) and on the interactions with the support oxide. This support oxide must have the following properties:
(i) Refractory properties, to prevent from grain coarsening due to sintering effects under hydrothermal conditions and/or CPO conditions;
(ii) Ionic conductivity, to prevent from coke formation; and
(iii) Strong interactions with the noble metal(s); it means that a minimum solubility of the noble metal(s) in the crystal structure of the oxide support must exist.

The support oxide has hence a strong influence on the steam reforming reaction. It not only determines the distribution of the metal clusters exhibiting a catalytic activity, but also allows control the coalescence phenomenon of these active sites in operating conditions, depending on how strong the cluster anchorage is, as mentioned hereinabove. The support must moreover be thermally stable in operating conditions to keep its initial high specific surface area (resistance to sintering and as a consequence to the encapsulation of the active sites). Finally, the support also affects the reactivity and the resistance to coke formation and can even participate in the catalytic reaction itself. The advantage of oxide presenting oxygen transport properties is to provide an extra source of oxygen that prevents the accumulation of carbon on the catalyst.

The catalyst final microstructure control (noble metal incorporated in the ceramic support is a key point for the stability and the activity in operating conditions. Consequently, the catalyst elaboration process must be perfectly reliable with regards to the nanostructure it conducts to.

Soft chemical routes can be followed to adapt the elaboration process. These routes may result of different approaches: either the use of liquid precursors only (Sol-gel technique, Co-precipitation...), or the use of both solid and liquid precursors. For instance, the noble metal(s) can be introduced through liquid precursor(s) and the support can be in the form of a nanopowder of refractory and ionic conductive oxide, or the use of both liquid and gas (spray pyrolysis for example).

In all cases, after the thermal treatment, the objectives are:
(i) To obtain the solid solution (or other forms of intimate mixtures). and
(ii) to obtain a small support nanopowder (typically less than 200 nm in diameter and preferably around 20 nm but in all cases with a high resistance to sintering).

After the reaction in operating conditions, the nanostructure of the catalytic material is characterized by a mixture of:
(i) Some metallic particles extracted out of the solid solution (or other forms of intimate mixtures) and well dispersed onto the support surface; and
(ii) A solid solution with a lower amount of metal, which may show evidence of a catalytic activity.
The nanosized claimed catalytic composition may have the following specific features:
A specific area determined by BET, a S_{BET} between 2 and 200 m².g⁻¹
A micro-pore volume between 0.0001 and 0.0002 cm³.g⁻¹
A mesopore size distribution between 50 and 100 nm
A monomodal distribution of the elementary nanometric support particles
A free M° apparent crystal size (extracted out of MᵤCeₓZr_{y}O_{2-δ}) = < 50 nm, preferably < 10 nm
A characteristic XRD pattern showing only the crystal phases of the support material and of the excess noble metal(s) after the elaboration process
A characteristic peak of reducibility of the catalyst obtained under reducing atmosphere at high temperature 850-900°C (TPR-TPO characterizations) of said solid support, without forming a continuous layer coating overall outer surface.
This novel claimed catalytic composition can be used in a large range of operating conditions: from 1 up to 40 atm., from 650 up to 1200°C with high space velocities (3000 - 360000/h). The SMR and CPO thermodynamic conditions for the specific case of RhCeₓO_{2-δ} + extracted Rh° + free Rh° are very close or equal to the equilibrium.
The claimed catalytic composition may be deposited on various substrates such as ceramics (cordierite....) or metal alloys (FeCrAlY...). In addition, it can easily be shaped into balls, pellets, and monoliths... as a function of the targeted industrial applications.

In order to illustrate this approach, examples are described hereafter.

### Example 1a: Preparation of a Ce_{0.75}Zr_{0.25}O_{2-δ} support nanopowder by liquid route

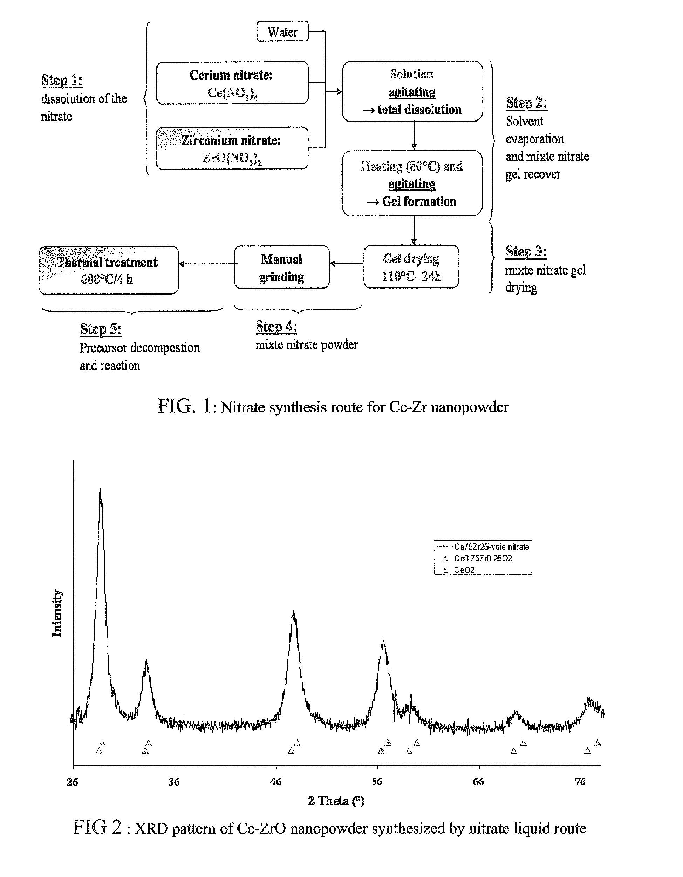

Figure 1 is a diagrammatic representation of a chemical route, which involves nitrate salts as precursors, to obtain the refractory and ionic conductor oxide Ce_{0.75}Zr_{0.25}O_{2-δ} support nanopowder. Other routes may be used, like the sol-gel technique, or the co-precipitation.

The powder resulting from Step 3 of Figure 1 is made of non-cohesive large blocks with a very porous morphology (specific surface area ≈ 45 m².g¹), these blocks resulting from the agglomeration of 30 nm elementary nanoparticles. Before the Rhodium deposition and the thermal treatment to form the solid solution RhᵤCe_{0.75-α} Zr_{0.25-β}O_{2-δ}, several steps of de-agglomeration such as high-energy attrition milling or ultrasonic treatments must adapt the powder granulometry.

Figure 2 is the X ray diffraction pattern of the Ce_{0.75}Zr_{0.25}O_{2-δ} nanopowder synthesized by the nitrate route represented by Figure 1. It shows large peaks, likely due to a small crystallite size and/or to a small variation of the material composition.

### Example 1b: Rhodium deposition on CeO₂

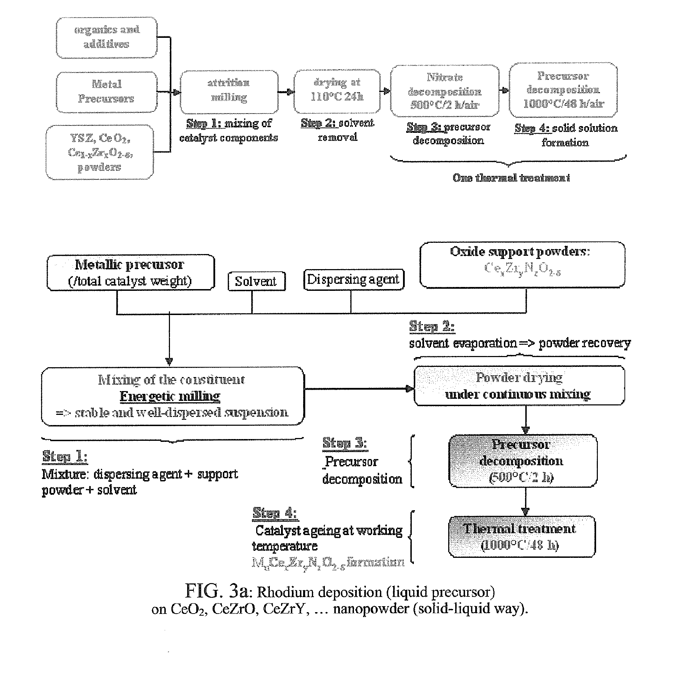

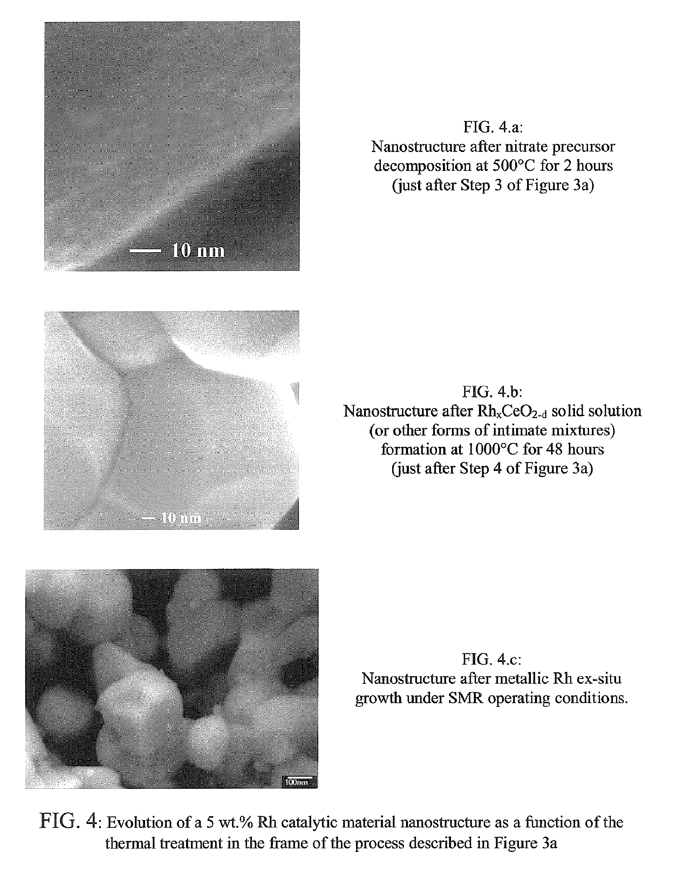

The different steps of an example of a processing route to deposit Rh catalyst on CeO₂ are presented in Figure 3a. It is completely different from the conventional and traditional impregnation methods (successive wetness impregnation). The advantage of this route is to provide an homogeneous, thus reliable, distribution of metal(s) precursor(s) on the support surface before the formation of the RhᵤCeO_{2-δ} solid solution by thermal treatment + free Rh₂O₃ in some case (Rh excess: 15 wt.%Rh/CeO₂ for example). Several RhᵤCeO_{2-δ} solid solutions (or other forms of intimate mixtures) corresponding to Rh contents in the range from 0.1 to 5 wt.% were prepared following the route described in Figure 3a. These samples were characterized by XRD, porosimetry and FESEM.

Figure 4: The FESEM observations of Figure 4, allows to see the evolution of a 5 wt.% Rh catalytic material nanostructure in the course of the thermal treatment in the frame of the process described in Figure 3a (in the case of a Rh proportion in the catalytic composition, which is below the limit of the solubility value in CeO₂).

Figure 4a is a FESEM photography of the nanostructure after nitrate precursor decomposition at 500°C for 2 hours (just after Step 3 of Figure 3a). Well-dispersed and nanometric isolated islands of Rh₂O₃ (<10 nm) are observed on the CeO₂ support.

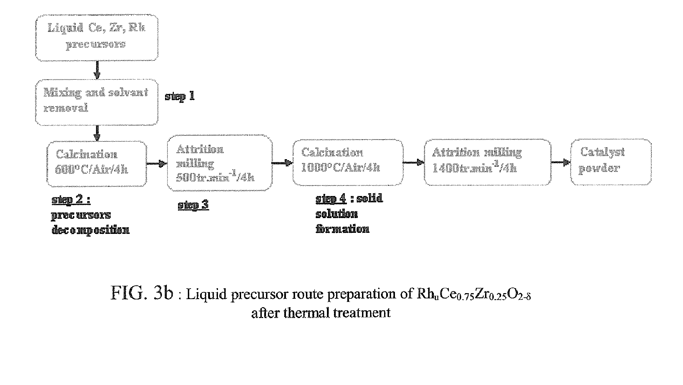

Figure 4b is a FESEM photography of the nanostructure after RhₓCeO_{2-δ} solid solution (or other forms of intimate mixtures) formation at 1000°C for 48 hours (just after Step 4 of Figure 3). No Rh₂O₃ islands are observed on the Ceria surface anymore (the support surface is completely smooth) because of the formation of the RhₓCeO_{2-d} solid solution (or other forms of intimate mixtures) formation in the support sub-surface

Figure 4c is a FESEM photography of the nanostructure after *"ex-situ* growth" of metallic Rh under SMR operating conditions (900°C/20bars; S/C=1.5, τ=4s). Nanosized Rh clusters (<50nm) are extracted out of the solid solution (or other forms of intimate mixtures). A good anchorage of Rh clusters is observed likely due to an epitaxial growth. The remaining solid solution (or other forms of mixtures) may also take part to the catalytic activity.

### Example 1c: One-step elaboration of RhᵤCe_{0.75}Zr_{0.25}O_{2-δ}

Figure 3b is a diagrammatic representation of a chemical route, which involves a Rh Ce and Zr nitrate salts dispersion as liquid precursors, to obtain RhᵤCe_{0.75}Zr_{0.25}O_{2-δ}. This route provides an homogeneous thus reliable distribution of all the elements before the formation of the RhᵤCeO_{2-δ} solid solution.

### Example 2a: Catalytic composition test under SMR and CPO experimental conditions

The catalytic activity of catalytic compositions of the type:

**RhᵤCeO_{2-δ} and RhᵤCeₓZr_{y}O_{2-δ}**

with several proportions of Rh were tested under SMR and CPO conditions.

In the past, several authors have studied the solubility of Rh in YSZ and ZrO₂ crystallographic structures (Ruckenstein et al., "Effect of support on partial oxidation of methane to synthesis gas over Rhodium catalyst", 1999 Journal of Catalysis 187, 151-159; Y-C. Zhang, et al., "Stabilization of cubic ZrO2 with Rh(III) and/or La(III"). 1988 Journal of Solid State Chemistry 72, 131-136; E. Ruckenstein, H. Y. Wang, "Temperature-Programmed Reduction and XRD Studies of the Interactions in Supported Rhodium Catalysts and Their Effect on Partial Oxidation of Methane to Synthesis Gas". 2000 Journal of Catalysis 190, 32-38). They concluded that, for RhᵤZr_{y}O_{2-δ} the solubility value of Rh is 8 mol.%. The solid solution formed is Rh_{0.08}Zr_{0.92}O_{1.96}. Above this value, the excess of Rhodium, which does not go into solid solution (or other forms of mixtures) in the support material, stands as "free" rhodium-based islands on the support surface.
In the present experiment, catalyst compositions with several values of Rh weight proportions were tested (0.1 % Rh, 1% Rh, 5% Rh,).

### 1. Characterization of the samples

The BET. specific surface areas of RhᵤCeₓO_{2-δ} with and without "free" Rh in excess (the excess of Rh is on the form of an Rh₂O₃ oxide before reduction) were measured using a SORPTY™ 1750 instrument.

The metal dispersion, specific surface area and crystal size were determined with a CHEMISORB™ 2750 instrument according to the H₂ chemisorption method.

The results are given in Table 1

**Table 1: BET. Specific surface areas and results of the chemisorption analyses on the solid-solution (or other forms of intimate mixtures) samples (initial phase: RhᵤCe₂O_{2-δ} + eventually "free" Rh in excess)**

| | BET. specific surface area | Rh dispersion state | Metallic surface area | Apparent crystallite size |
|---|---|---|---|---|
| | m²/g | % | m²/g of metal | nm |
| 5wt.%Rh / CeO₂ | 2.78 | 4.23 | 18.6 | 26 |
| 1wt.%Rh / CeO₂ | 3.97 | 9.67 | 42.5 | 11 |
| 0.1 wt. %Rh / CeO₂ | 3.82 | | | 0.7 |
| (1wt.%Rh + 1wt.% Pt) / CeO₂ | 3.85 | | | |
| (1wt.%Rh + 1wt.% Pt)/ Ce_{0.75}Zr_{0.25}O₂ | 16.34 | | | |
| 1wt.%Rh / Ce_{0.75}Zr_{0.25}O₂ | 17.80 | | | |

As expected (see Table 1), the crystal size increases together with the Rh loading, whereas the surface area and the dispersion state of metallic clusters are decreasing.

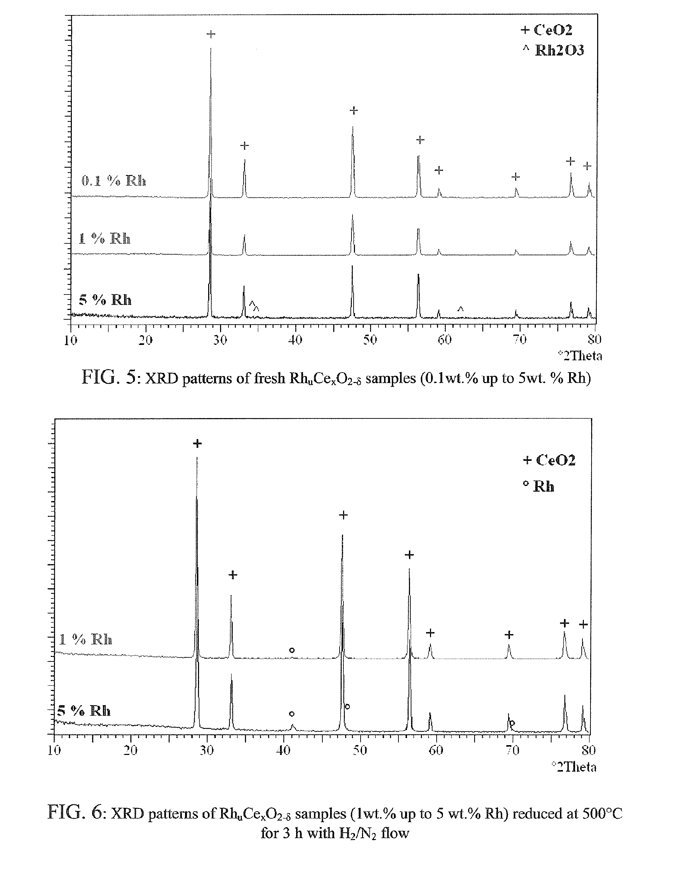

Figure 5 is the XRD patterns of RhᵤCeₓO_{2-δ} fresh samples, produced by the process described in Figure 3 and exhibiting Rhodium weight fractions from 0.1 to 15%. They show diffraction peaks corresponding to the support phase (CeO₂) and to the β-Rh₂O₃ phase at 5 and more at 15 wt.% of Rh. For the lower amounts of Rh, the intensity of the β-Rh₂O₃ peaks is too low to be detected. Anyhow, it could be interesting to work with the lowest amounts of Rh as possible:
(i) to improve the homogeneity of the catalytic material, as well as
(ii) to reduce the catalyst costs, provided that a high catalytic activity (close to the thermodynamics equilibrium) can be maintained by the size reduction and increasing number of active sites.

Figure 6 is the XRD patterns of samples reduced under operating conditions at 500°C for 3 h with H₂/N₂ flow. Some diffraction peaks corresponding to Rh⁰ are observed instead of those corresponding to β-Rh₂O₃.

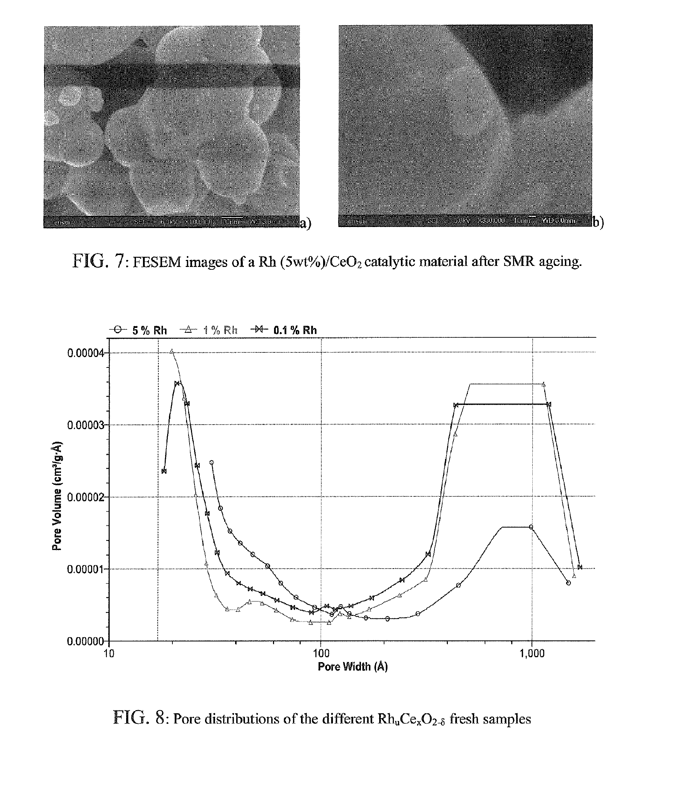

FESEM images (Figures 7a and 7b) of samples containing 5wt.% of Rh show evidence, after an SMR ageing of 40 hours, of free Rh clusters (size between 5 nm and 50 nm) which is in accordance with XRD results. These clusters were extracted out of the initial RhᵤCeₓO_{2-δ} solid solution by an *"ex-situ"* growth process. The catalytic activity is due to these free Rh clusters, but also likely to the remaining RhₓCe₁₋ₓO_{2-δ} solid solution (or others forms of intimate mixtures).

Figure 8 represents the pore distributions measured using the BET technique for the different Rh concentrations of the RhᵤCeₓO_{2-δ} fresh samples. The distribution appears to very similar whatever the sample is; it is essentially governed by the initial CeO₂ support nanopowder, which is the same in all cases. However, the volume of the large pores around 100 nm is reduced for the highest amounts of Rh.

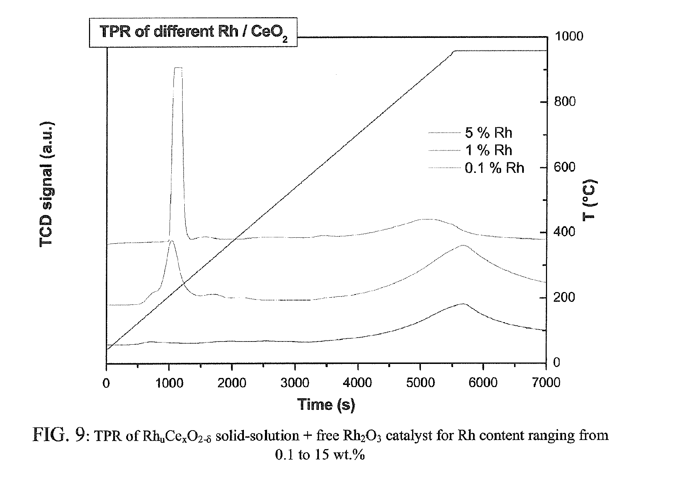

The sample reducibility was determined by TPR analyses. The TPR patterns of Figure 9 point out that the Rh reduction (Rh₂O₃ → Rh⁰) occurs at 200-250°C, while the peaks at 900°C can be attributed to the partial reduction of surface Ce⁴⁺ → Ce³⁺ or/and to the interaction between the support and the noble metal corresponding to a solid-solution RhᵤCeₓO_{2-δ} (or others forms of intimate mixtures). The width of the peak corresponding to the reduction of Rh depends on the content of Rh, on the size of Rh particles and on the interaction between the support and the noble metal. That explains why the width of the first peak is greater for high amounts of Rh.

In our system, the surface sites are nanometric. At high temperature and under reducing atmosphere and depending on the saturation, a part of the nanometric entities initially located at the surface of the nanoparticles of Ceria leave this surface, towards the inner part of the support leading to the formation of a solid solution of which is comparable to an alloy. To be active, this system further requires a reduction step, which is carried out at high temperature (> 800°C), in order to conduct to the *"ex-situ"* growth of metal Rh sites at the Ceria surface upon the solid solution. The performances of this new material were evaluated for SMR &CPO processes.

### 2. Methane Catalytic partial oxidation (CPO) with the inventive catalytic composition

The evaluation in the partial oxidation of CH₄ (CPO) of the activity of samples with different wt.% of Rh was carried out with a mixture of CH₄/O₂/He (v/v/v less and less diluted by He), either with or without a pre-reducing step (500°C for 3 h with H₂/N₂ flow) of the catalytic composition. Tests were carried out on the not-reduced and pre-reduced 5wt.% Rh/CeO₂ catalyst (Tables 2 and 3).

**Table 2: Results of the CPO tests on 5 wt.% Rh/CeO₂ (carried out without pre-reduction step).**

| CH₄/O₂/He | v/v/v | 2/1/20 Initial test | 2/1/20 | 2/1/4 | 2/1/1 | 4/2/2 | 2/1/20 | 2/1/20 Final test |
|---|---|---|---|---|---|---|---|---|
| Tₒᵥₑₙ | °C | 500 | 750 | 750 | 750 | 750 | 750 | 500 |
| CT | ms | 63 | 63 | 62 | 102 | 52 | 63 | 63 |
| Tₒᵤₜ | °C | 605 | 777 | 810 | 735 | 852 | 748 | 590 |
| Tₘₐₓ | °C | 605 | 791 | 879 | 930 | 907 | 780 | 599 |
| Conv. CH₄ | % | **36.0** | 61.4 | 73.8 | 67.3 | 80.1 | 84.9 | **46.2** |
| Sel. CO | % | 30.6 | 83.5 | 95.2 | 88.7 | 97.6 | 96.4 | 52.1 |
| Sel. H₂ | % | 44.5 | 78.6 | 85.0 | 82.7 | 87.1 | 92.7 | 66.2 |
| Sel. CO₂ | % | **69.4** | 16.5 | 4.8 | 11.3 | 2.4 | 3.6 | **47.9** |

**Table 3: Results of the CPO tests on 5 wt.% Rh/CeO₂ (pre-reduction for 3 h at 500°C).**

| CH₄/O₂/He | v/v/v | 2/1/20 Initial test | 2/1/20 | 2/1/4 | 2/1/1 | 4/2/2 | 2/1/20 | 2/1/20 Final test |
|---|---|---|---|---|---|---|---|---|
| Tₒᵥₑₙ | °C | 500 | 750 | 750 | 750 | 750 | 750 | 500 |
| CT | ms | 63 | 63 | 62 | 102 | 52 | 63 | 63 |
| Tₒᵤₜ | °C | 552 | 752 | 808 | 751 | 788 | 750 | 546 |
| Tₘₐₓ | °C | 629 | 808 | 826 | 957 | 928 | 790 | 614 |
| Conv. CH₄ | % | **43.1** | 76.7 | 84.0 | 78.3 | 88.7 | 93.4 | **53.2** |
| Sel. CO | % | 37.8 | 92.2 | 96.8 | 93.3 | 99.2 | 98.9 | 57.8 |
| Sel. H₂ | % | 63.7 | 89.7 | 91.9 | 89.2 | 92.8 | 96.7 | 78.1 |
| Sel. CO₂ | % | **62.2** | 7.8 | 3.2 | 6.7 | 0.8 | 1.1 | **42.2** |

The pre-reduced 5wt.% Rh/CeO₂ sample shows evidence of higher performances than the non-reduced sample in all the reaction conditions. In addition, the CH₄ conversion increases, whereas the CO₂ selectivity decreases with time on stream due to the on-going reduction of samples in operating conditions (more & more reducing and hotter stream). This explains also why the pre-reduced catalyst is always more efficient than the non-pre-reduced one at the beginning.

The benefits in term of performances of these systems are due:
(i) to the Rh clusters extracted out of the RhᵤCeₓO_{2-δ} solid solution (or other forms of intimate mixtures) and likely,
(ii) to the contribution of the remaining RhᵤCeₓO_{2-δ} solid solution (or other forms of mixtures).

The following tables record the catalytic activity in CPO conditions of various catalytic compositions according to the invention

**Table 4: Results of the CPO tests on 1 wt.% Rh / CeO₂ (after reduction for 3 h at 500°C).**

| CH₄/O₂/He | v/v | 2/1/20 Initial test | 2/1/20 |
|---|---|---|---|
| Tₒᵥₑₙ | °C | 500 | 750 |
| CT | ms | 63 | 63 |
| Tₒᵤₜ | °C | 573 | 764 |
| Tₘₐₓ | °C | 621 | 813 |
| Conv. CH₄ | % | **48.7** | 74.7 |
| Sel. CO | % | 45.0 | 91.1 |
| Sel. H₂ | % | 70.6 | 85.0 |
| Sel. CO₂ | % | 55.0 | 15.0 |

**Table 5: Results of the CPO tests on 0.1 wt.% Rh / CeO₂ (after reduction for 3 h at 500°C).**

| CH₄/O₂/He | v/v/v | 2/1/20 Initial test | 2/1/20 | 2/1/4 | 2/1/1 | 4/2/2 | 2/1/20 Final test |
|---|---|---|---|---|---|---|---|
| Tₒᵥₑₙ | °C | 500 | 750 | 750 | 750 | 750 | 500 |
| CT | ms | 63 | 63 | 62 | 102 | 52 | 63 |
| Tₒᵤₜ | °C | 592 | 792 | 807 | 778 | 827 | 579 |
| Tₘₐₓ | °C | 644 | 844 | 903 | 876 | 971 | 627 |
| Conv. CH₄ | % | 28.4 | 34.2 | 71.0 | 68.6 | 75.3 | 39.4 |
| Sel. CO | % | 7.9 | 35.4 | 88.7 | 89.1 | 94.1 | 33.7 |
| Sel. H₂ | % | 16.3 | 35.0 | 86.1 | 86.4 | 88.0 | 54.8 |
| Sel. CO₂ | % | 92.1 | 64.6 | 11.3 | 10.9 | 5.9 | 66.3 |

**Table 6: Results of the CPO tests on (0.1 wt.% Rh + 0.1 wt % Pt) / CeO₂ (after reduction for 3 h at 500°C).**

| CH₄/O₂/He | v/v/v | 2/1/20 Initial test | 2/1/20 | 2/1/4 | 2/1/1 | 4/2/2 | 2/1/20 Final test |
|---|---|---|---|---|---|---|---|
| Tₒᵥₑₙ | °C | 500 | 750 | 750 | 750 | 750 | 500 |
| CT | ms | 63 | 63 | 62 | 102 | 52 | 63 |
| Tₒᵤₜ | °C | 580 | 774 | 786 | 765 | 806 | 565 |
| Tₘₐₓ | °C | 632 | 814 | 868 | 847 | 924 | 605 |
| Conv. CH₄ | % | 34.9 | 60.5 | 85.2 | 84.1 | 87.8 | 54.5 |
| Sel. CO | % | 15.1 | 81.5 | 97.0 | 96.7 | 97.8 | 55.8 |
| Sel. H₂ | % | 31.5 | 74.5 | 90.7 | 89.6 | 88.4 | 77.6 |
| Sel. CO₂ | % | 84.9 | 18.5 | 3.0 | 3.3 | 2.2 | 44.2 |

**Table 7: Results of the CPO tests on 1 wt.% Rh /Ce_{0.75}Zr_{0.25}O₂ (after reduction for 3 h at 500°C).**

| CH₄/O₂/He | v/v/v | 2/1/20 Initial test | 2/1/20 | 2/1/4 | 2/1/1 | 4/2/2 | 2/1/20 Final test |
|---|---|---|---|---|---|---|---|
| Tₒᵥₑₙ | °C | 500 | 750 | 750 | 750 | 750 | 500 |
| CT | ms | 63 | 63 | 62 | 102 | 52 | 63 |
| Tₒᵤₜ | °C | 560 | 746 | 767 | 764 | 806 | 553 |
| Tₘₐₓ | °C | 662 | 798 | 867 | 856 | 914 | 604 |
| Conv. CH₄ | % | **46.3** | 90.1 | 87.8 | 85.3 | 89.8 | **57.4** |
| Sel. CO | % | 43.1 | 96.5 | 98.0 | 96.9 | 98.8 | 60.7 |
| Sel. H₂ | % | 69.7 | 83.9 | 86.6 | 88.8 | 87.4 | 79.7 |
| Sel. CO₂ | % | **56.9** | 3.5 | 2.0 | 3.1 | 1.2 | **39.3** |

**Table 8: Results of the CPO tests on 1 wt.% Rh + 1 wt.% Pt / Ce_{0.75}Zr_{0.25}O₂ (after reduction for 3 h at 500°C).**

| CH₄/O₂/He | v/v/v | 2/1/20 Initial test | 2/1/20 | 2/1/4 | 2/1/1 | 4/2/2 | 2/1/20 Final test |
|---|---|---|---|---|---|---|---|
| Tₒᵥₑₙ | °C | 500 | 750 | 750 | 750 | 750 | 500 |
| CT | ms | 63 | 63 | 62 | 102 | 52 | 63 |
| Tₒᵤₜ | °C | 558 | 761 | 775 | 772 | 858 | 523 |
| Tₘₐₓ | °C | 668 | 805 | 871 | 865 | 982 | 658 |
| Conv. CH₄ | % | **45.7** | 84.1 | 86.0 | 70.1 | 78.9 | **60.4** |
| Sel. CO | % | 41.2 | 89.8 | 97.5 | 88.6 | 94.5 | 63.8 |
| Sel. H₂ | % | 66.2 | 94.8 | 88.8 | 85.3 | 87.7 | 82.1 |
| Sel. CO₂ | % | **58.8** | 10.2 | 2.5 | 11.4 | 5.5 | **36.2** |

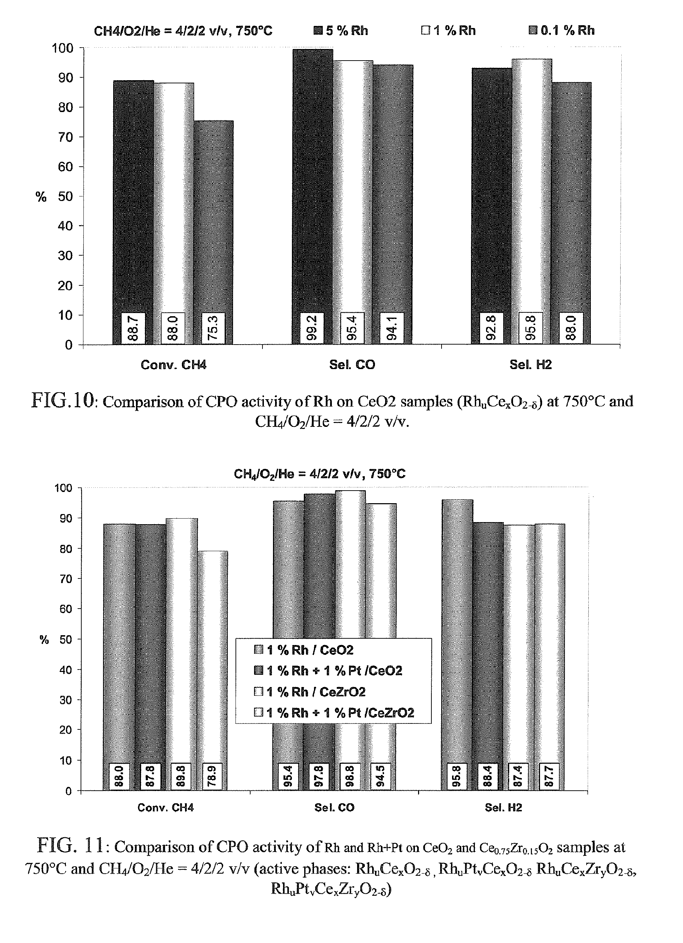

A comparison of the CPO catalytic activity between pre-reduced samples exhibiting different Rh loadings is given in Figure 10. The best CPO catalytic activity is obtained with 5wt.% Rh, but samples with lower Rh amounts (0.1 & 1 wt.%) exhibit also a strong activity although the quantity of Rh is decreased of more than one order of magnitude. This high effectiveness is due to smaller and numerous extracted Rh clusters. Figure 11 shows evidence that the addition of Pt does not improve the performances of the catalysts with low amount of Rh in this CPO process.

### 3. Steam methane-reforming results (SMR) with the inventive catalytic composition

The samples from 0.1 wt.% to 5wt.% Rh/CeO₂ were tested in the SMR reaction for 40 hours spread over 5 days of experimental work.

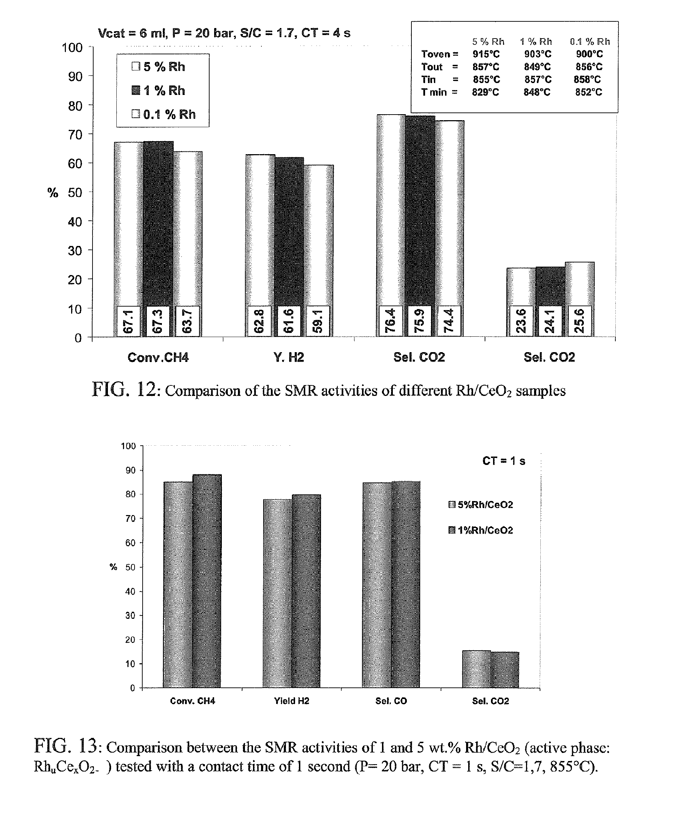

Figure 12 records the activity of the catalysts. It shows that the SMR activity (conversion, selectivity) of all samples is very similar, although the 0.1 wt.% Rh one shows slightly lower performances.

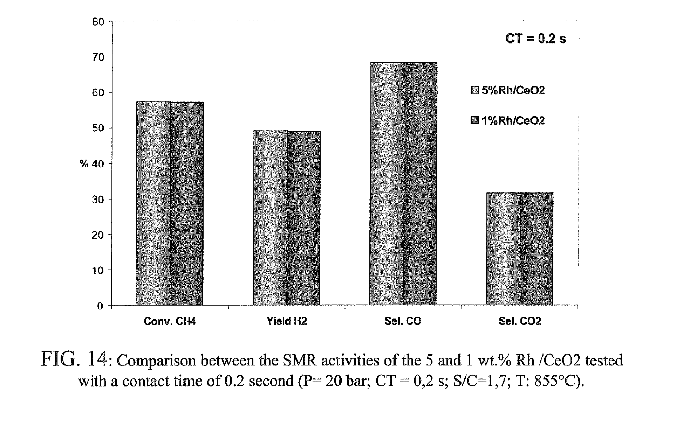

Additional tests, illustrated in Figures 13 and 14, were performed for lower contact times, using a same catalyst loading but increasing the flow rate by a factor of 4, then by a factor of 20.

Figure 13: Comparison between the SMR activities of 1 and 5 wt.% Rh / CeO₂ [(Active phase: RhᵤCeₓO_{2-δ}; Contact time: 1 second; Pressure: 20 10⁵ Pa (20 bars); S/C =1.7; Temperature: 855°C].

Figure 14: Comparison between the SMR activities of 1 and 5 wt.% Rh / CeO₂ [(Active phase: RhᵤCeₓO_{2-δ}; Contact time: 0.2 second; Pressure: 20 10⁵ Pa (20 bars); S / C =1.7; Temperature: 855°C].

A decrease of the contact time (CT) leads to a decrease of the performances of the different catalysts. In addition, for a CT of 1s, the catalyst with 1wt.% Rh generates a CH₄ conversion that is at least comparable, if even better, than that with 5wt.% Rh. This observation is capital, because it would mean that catalysts slightly loaded in Rh lead to huge and stable activities if their main characteristics are a good Rh dispersion, a small Rh cluster size together with a large number of Rh clusters, and if these characteristics remain stable during the SMR ageing.

The performance decrease is due to the limitation of heat transfer at low contact times (< 1s). In both cases (1 wt % and 5 wt%), the heat transfer explains the decrease of the CH₄ conversion. It is not a de-activation due to kinetic reasons or poisoning.

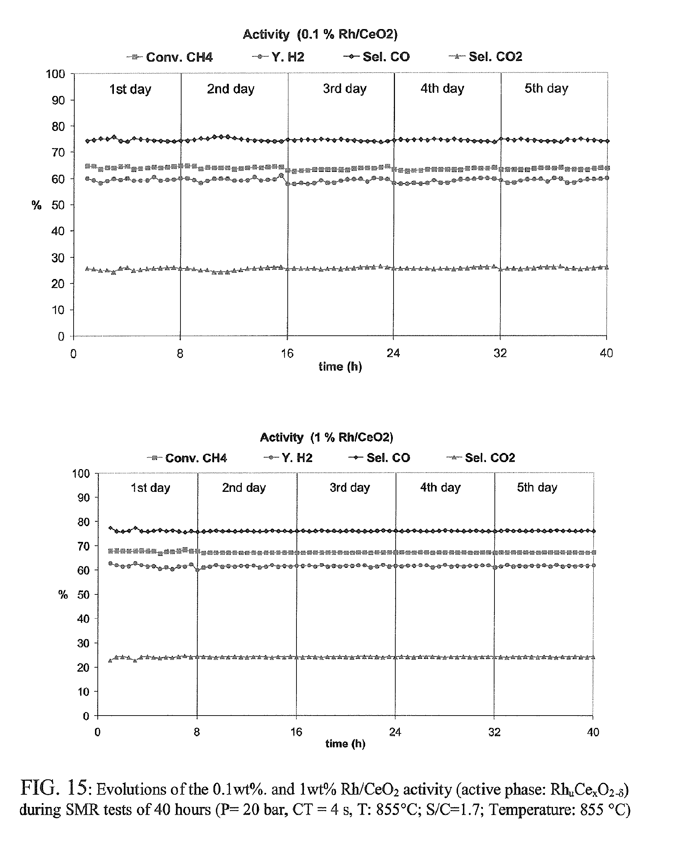

Figure 15 records the graphics of the evolution of the 0.1wt.%. and 1wt.% Rh/CeO₂ activity (active phase: RhᵤCeₓO_{2-δ}) during SMR tests of 40 hours (P= 20 bars, CT = 4 s, 855°C; S/C=1.7; Temperature: 855 °C)

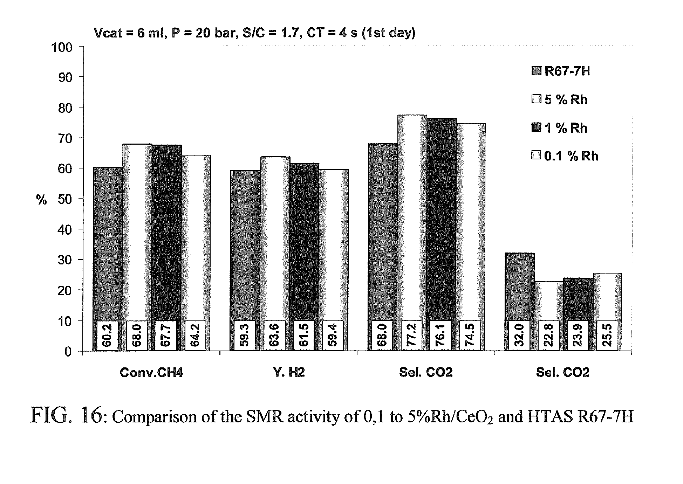

The activity of our Rh/Ceria catalyst was compared to a commercial catalyst Ni/MgAl₂O₄ (ref HTas R67-7H). The comparison presented in Figure 16 points out a better efficiency of our new kind of catalyst for SMR.

## Claims

1. A catalytic composition comprising a catalytically active metal and a solid support, **characterized in that** said catalytically active metal is included into the core structure of said solid support, and said solid support is a refractory and ionic conductive oxide.

2. A catalytic composition according to Claim 1, **characterized in that** it is a saturated solid solution or other form of intimate mixture of said catalytically active metal in said solid support.

3. A catalytic composition according to Claim 1 or Claim 2, **characterized in that** the catalytically active metal is selected from Ruthenium (Ru), Rhodium (Rh), Palladium (Pd), Rhenium (Re), Osmium (Os), Iridium (Ir) Platinum (Pt) or combinations thereof.

4. A catalytic composition according to Claim 3, **characterized in that** the catalytically active metal is Rhodium or a combination of rhodium with Platinum.

5. A catalytic composition according to one of claims 1 to 4, **characterized in that** the refractory and ionic conductive oxide is selected from Ceria (CeO₂), Zirconia (ZrO₂), mixed oxides of the formula (I):
Ce₍₁₋ₓ₎ Zrₓ O_{(2-δ)} (I),
wherein 0 < x < 1 and δ ensures the electrical neutrality of the oxide, or doped mixed oxides of the formula (II):
Ce_{(1-x-y)} Zrₓ D_{y} O_{2-δ} (II),
wherein D is selected from Magnesium (Mg), Yttrium (Y), Strontium (Sr), Lanthanum (La), Praseodium (Pr), Samarium (Sm), Gadolinium (Gd), Erbium (Er) or Ytterbium (Yb); wherein 0 < x < 1, 0< y <0.5 and δ ensures the electrical neutrality of the oxide.

6. A catalytic composition according to claim 5, **characterized in that** the catalytically active metal is Rhodium (Rh), and the refractory and ionic conductive oxide is selected from Ceria (CeO₂) or from the mixed oxide of the formula (I):
Ce_{(1-x')} Zr_{x'} O_{(2-δ)} (I'),
wherein 0 < x' ≤ 0.5 and δ ensures the electrical neutrality of the oxide,

7. Process for the preparation of a catalytic composition as defined in one of Claim 1 to 6 comprising the following successive steps:
Step 1: Mixing a precursor of the catalytically active metal with a powder of the refractory and ionic conductive oxide in a proportion to reach a final amount of said catalytically active metal less or equal to its dissolving maximum amount in said refractory and ionic conductive oxide, in a solvent containing a dispersing agent, to form a suspension;
Step 2: Drying the suspension obtained at Step 1, to form a powdered mixture;
Step 3: Heating the powdered mixture obtained at Step 2, to decompose the precursor of the catalytically active metal, to obtain the catalytic composition.

8. Process according to claim 7, which comprises a subsequent Step 4 of ageing the catalytic composition obtained at Step 3.

9. Process according to Claim 7 or to Claim 8, which comprises the preparation of the powder of the refractory and ionic conductive oxide, which is used at Step 1, said preparation comprising the subsequent following steps:
Step P₁: Preparation of an aqueous solution of salt(s) precursor(s) of said refractory and ionic conductive oxide;
Step P₂: Partial evaporation by heating and agitation of the water of the solution obtained at step P₁, to form a gel of the metal salt(s) precursor(s) of the refractory and ionic conductive oxide;
Step P₃: Heat drying of the gel obtained at Step P₂,
Step P₄: Grinding of the dry gel obtained at Step P₃, to form a powder of the gel of the metal salt(s) precursor(s) of the refractory and ionic conductive oxide.
Step P₅: Heating of the powder obtained at step P₄ to decompose the precursors and to obtain the powder of the refractory and ionic conductive oxide.

10. Process for the preparation of a catalytic composition as defined in one of Claims 1 to 6 comprising the following successive steps:
Step 1': Preparation of a mixture of salt(s) precursor(s) of said refractory and ionic conductive oxide and of precursor(s) of the catalytically active metal, comprising the formation of a dispersion of said precursors, wherein the proportion of metal salt precursor allows to reach a final amount of said catalytically active metal less or equal to its dissolving maximum amount in said refractory and ionic conductive oxide, in a liquid medium followed by the solvent removal;
Step 2': Calcination of the mixture prepared at step 1', under air or oxygen to decompose said precursors and to obtain a mixture of said refractory and ionic conductive oxide and of the catalytically active metal;
Step 3': Attrition milling of the mixture obtained at Step 2', to obtain the catalytic composition.

11. Process according to claim 10, wherein the Step 2'-Step 3' sequence is repeated twice.

12. Use of a catalytic composition as defined in anyone of claims 1 to 6, as a catalyst in hydrocarbons Steam Reforming, hydrocarbons catalytic partial oxidation or hydrocarbons dry reforming.

13. Use according to Claim 12, wherein hydrocarbons is Natural gas, methane, ethane, propane, butane or mixtures thereof.

14. Synthesis gas production either by steam reforming, by catalytic partial oxidation or by dry reforming of natural gas, methane, ethane, propane, butane or mixtures thereof, involving as reaction catalyst, the catalytic composition as defined in one of Claims 1 to 6.
